# EUROPÄISCHE PATENTSCHRIFT

(11) **EP 2 113 699 B1**
(45) Veröffentlichungstag und Bekanntmachung des Hinweises auf die Patenterteilung: **20.07.2011**
(21) Anmeldenummer: 09156712.3
(22) Anmeldetag: 30.03.2009
(51) Int. Cl.: F16L 3/10, F16L 3/11

(54) **Rohrschelle**
Pipe clamp
Collier de serrage pour tuyaux

(30) Priorität: 29.04.2008 DE 102008001443
(43) Veröffentlichungstag der Anmeldung: 04.11.2009
(73) Patentinhaber: HILTI Aktiengesellschaft, 9494 Schaan (LI)
(72) Erfinder: Rosenkranz, Falk, 9658, Wildhaus (CH); Schierscher, Gabriel, 9494, Schaan (LI)

(56) Entgegenhaltungen:
- EP-A1- 0 643 247
- DE-A1- 4 002 450
- DE-A1- 10 003 183
- DE-U1- 9 209 812
- DE-U1- 9 215 358
- DE-U1- 9 309 869

## Beschreibung

Die Erfindung betrifft eine Rohrschelle mit einem Schellenring, der zwei einander zugewandte Flansche aufweist und der mittels einer Spannschraube mit einer Schraubenlängsachse verschllessbar Ist, wobei einer der Flansche einen Innengewindeabschnitt mit einer in Bezug auf die Schraubenlängsachse der Spannschraube axialen Erstreckung für den Eingriff eines Gewindeabschnitts der Spannschraube und der andere Flansch eine Öffnung für die die Durchführung der Spannschraube aufweist, und wobei die Spannschraube einen Schraubenkopf und einen sich entlang der Schraubenlängsachse erstreckenden Schaft aufweist, der anschliessend an den Schraubenkopf einen ersten Gewindeabschnitt, daran anschliessend einen verjüngten Abschnitt und daran anschliessend zumindest einen zweiten Gewindeabschnitt aufweist

Eine derartige Rohrschelle dient der Fixierung und Halterung von Leitungen, wie z. B. von Rohren, Kabeln oder dergleichen, an einem Untergrund oder an einem Träger mittels eines Befestigungselementes, wie beispielsweise einer Gewindestange.

Aus der DE 40 02 450 A1 ist eine gattungsgemässe Rohrschelle bekannt, deren Spannschraube am Schaft anschliessend an den Schraubenkopf einen ersten Gewindeabschnitt, daran anschliessend einen verjüngten Abschnitt und daran anschliessend einen zweiten Gewindeabschnitt aufweist. Der verjüngte Abschnitt ist benachbart zum freien Ende des Schafts der Spannschraube vorgesehen und weist eine axiale Erstreckung auf, die mindestens der axialen Erstreckung des Innengewindeabschnitts im einen Flansch entspricht. Die Spannschraube wird in den Innengewindeabschnitt des Flansches eingeschraubt, bis der verjüngte Abschnitt der Spannschraube im Innengewindeabschnitt liegt, womit die Spannschraube für ein Schliessen und Öffnen verschwenkbar sowie unverlierbar am entsprechenden Flansch gehalten ist. Zum Schliessen der Rohrschelle wird der erste Gewindeabschnitt mit dem Innengewindeabschnitt am Flansch in Eingriff gebracht und eingeschraubt, wobei die eingelegte Leitung über die erzeugte Klemmkraft in der Rohrschelle fixiert wird. Weitere Rohrschellen, bei denen die Spannschrauben Verjüngungen aufweisen, um welche die Spannschrauben zum Öffnen und Schliessen der Schelle verschwenkbar sind, sind aus der DE 100 03 183 A1, der EP 0 643 247 A1 und der DE 92 09 812 U bekannt.

Zur Isolierung der eingelegten Leitung von dem Schellenring, z. B. für einen Schallschutz oder eine Kälte- beziehungsweise Wärmeisolierung, werden entsprechende Einlagen an dem Schellenring vorgesehen. Wird beim Verspannen der Rohrschelle eine zu grosse Klemmkraft aufgebracht, deformieren sich die Einlagen stark und die Entkopplung ist vermindert oder geht ganz verloren. Weiter sind insbesondere auf dem Gebiet der Heizungs- und Kältetechnik auch Leitungen bekannt, die entlang ihrer axialen Erstreckung mit einer Streckenisolierung versehen sind.

Nachteilig an der bekannten Lösung ist, dass die über die Spannschraube erzeugte Klemmkraft nicht definiert aufbringbar ist und unter Umständen die vorgesehene Entkopplung oder Isolierung der fixierten Leitung nicht mehr gegeben ist.

Aus der DE 92 15 358 U1 ist eine Spannschraube einer Rohrschelle bekannt, die zur Begrenzung einer maximal aufbringbaren Klemmkraft anschliessend an den Schraubenkopf einen vergrösserten Schaftabschnitt mit einem freien Rand als unüberwindbaren Anschlag aufweist. Sobald der freie Rand des vergrösserten Schaftabschnitts mit dem Flansch in Anlage kommt, wird ein weiteres Verspannen der Rohrschelle verhindert und somit die maximal aufbringbare Klemmkraft begrenzt.

Nachteilig an der bekannten Lösung ist, dass sich bedarfsweise keine höhere Klemmkraft aufbringen lässt, um beispielsweise die eingelegte Leitung temporär unverschieblich zu halten oder diese Rohrschelle für Steigleitungen zu verwenden.

Aufgabe der Erfindung ist es, eine Rohrschelle zu schaffen, bei der die Einstellung der optimalen Klemmkraft zur Fixierung der eingelegten Leitung dem Anwender angezeigt wird, wobei bedarfsweise auch eine höhere Klemmkraft aufbringbar ist.

Die Aufgabe ist durch die Merkmale der unabhängigen Ansprüche gelöst. Vorteilhafte Weiterbildungen sind in den Unteransprüchen dargelegt.

Gemäss der Erfindung entspricht die axiale Erstreckung des ersten Gewindeabschnitts dem 1.0- bis 4.0-fachen der axialen Erstreckung des Innengewindeabschnitts und die axiale Erstreckung des verjüngten Abschnitts entspricht dem 1.0- bis 2.0-fachen der axialen Erstreckung des Innengewindeabschnitts. Weiterhin ist vorgesehen, dass die axiale Erstreckung des ersten Gewindeabschnitts 10% bis 40% der Gesamtlänge des Schafts beträgt.

Beim Verspannen des Schellenrings wird die Spannschraube in den Innengewindeabschnitt des einen Flansches eingeschraubt, wobei die optimale Klemmkraft während des Montagevorgangs eingestellt ist, wenn der verjüngte Abschnitt im Innengewindeabschnitt des Flansches zu liegen kommt. In dieser Stellung der Spannschraube dreht diese beim Aufbringen eines weiteren Drehmomentes leer. Die Rohrschelle ist in Bezug auf den eingelegten Leitungsdurchmesser und gegebenenfalls eine krümmungsseitig innen liegende Einlage an dem Schellenring oder einer die Leitung umgebende Isolierung derart ausgestaltet, dass in dem Montagezustand, im dem der verjüngte Abschnitt im Innengewindeabschnitt liegt, die ideale Klemmkraft auf diese eingelegte Leitung aufgebracht ist. Damit wird eine zu starke Pressung der fixierten Leitung oder der Einlage bzw. der die Leitung umgebenden Isolierung verhindert, welche gegebenenfalls zu einer Reduktion oder gar zu einem Verlust der isolierenden Eigenschaften der Einlage beziehungsweise der die Leitung umgebenden Isolierung führt. Aufgrund der begrenzten axialen Erstreckung des verjüngten Abschnitts ist nur ein begrenztes Spiel der Spannschraube in dem Flansch mit dem Innengewindeabschnitt vorhanden, was eine ausreichende Fixierung der eingelegten Leitung gewährleistet.

Um für einen begrenzten Zeitraum eine höhere Klemmkraft auf die eingelegte Leitung aufzubringen oder diese Rohrschelle auch zur Fixierung von Steigleitungen zu verwenden, lässt sich die Spannschraube unter axialem Druck weiter einschrauben, wobei der erste, sich an den Schraubenkopf anschliessende Gewindeabschnitt der Spannschraube mit dem Innengewindeabschnitt des Flansches in Eingriff kommt. Wird die höhere Klemmkraft nicht mehr benötigt, löst der Anwender die Spannschraube, wobei der verjüngte Abschnitt erneut im Innengewindeabschnitt im Flansch zu liegen kommt und somit dem Anwender die ideale Stellung für eine vorteilhafte Klemmkraft wieder angezeigt wird.

Der Anwender erkennt eindeutig an der Position des verjüngten Abschnitts, in welchem Klemmzustand sich die Rohrschelle befindet. Bedarfsweise kann der Anwender problemlos die Klemmkraft temporär oder dauerhaft erhöhen. Weiter erkennen auch Dritte, wie z. B. Kontrollpersonen oder Bauherren, mit einem Blick, ob ein ausgewogenes Verhältnis beispielsweise zwischen Klemmkraft und Schallentkopplung bei der erstellten Installation gegeben ist.

Die einzelnen Abschnitte am Schaft der Spannschraube müssen sich nicht zwingend direkt aneinander anschliessen. Beispielsweise ist zwischen dem Schraubenkopf und dem ersten Gewindeabschnitt ein gewindefreier Bereich vorgesehen. Weiter werden vorteilhaft zwischen den Gewindeabschnitten und dem verjüngten Abschnitt Übergangsbereiche vorgesehen, welche vorteilhaft kontinuierlich verlaufen. Der verjüngte Abschnitt weist vorteilhaft einen Aussendurchmesser auf, der maximal dem Kerndurchmesser des Gewindes der Spannschraube entspricht.

Der Schellenring ist z. B. aus Metall oder Kunststoff hergestellt und beispielsweise als einteiliger, eine Krümmung aufweisender Schellenbügel ausgebildet, an dessen Enden jeweils die einander zugewandten Flansche radial nach aussen abragen. In einer anderen Ausführung der Rohrschelle ist der Schellenring aus zwei oder mehr, jeweils eine Krümmung aufweisenden Schellenbügeln gebildet. Die Schellenbügel sind beispielsweise über Gelenkverbindungen miteinander verbunden, wobei an zwei zueinander benachbarten Schellenbügeln jeweils ein radial nach aussen abragender Flansch vorgesehen ist, die einander zugewandt sind zum Schliessen der Rohrschelle mittels der Spannschraube. Ein mehrteiliger Schellenring ermöglicht eine einfache Montage der einzulegenden Leitung in der Rohrschelle, da die Schellenbügel zueinander verschwenkbar sind.

In einer vorteilhaften Ausführung umfasst der Schellenring zwei, jeweils eine Krümmung aufweisende Schellenbügel, die sich jeweils annähernd entlang eines Halbkreises erstrecken und die jeweils an ihren Enden nach krümmungsseitig aussen abragende Flansche aufweisen. Die Schellenbügel sind über zwei Spannschrauben miteinander verbindbar, wobei vorteilhaft in beiden einander abgewandten Flanschen eines Schellenbügels jeweils ein Innengewindeabschnitt und in den beiden einander abgewandten Flanschen des anderen Schellenbügels jeweils nur Öffnungen für die Spannschrauben vorgesehen sind. Diese Ausgestaltung ermöglicht eine einfache Montage, da die Schellenbügel nicht nur zueinander verschwenkbar, sondern auch zueinander verdrehbar sowie miteinander verspannbar sind. Zudem ermöglicht diese Ausgestaltung der Rohrschelle bedarfsweise mittels einer Spannschraube oder mittels beiden Spannschrauben die Klemmkraft auf die eingelegte Leitung zu erhöhen und anschliessend wieder auf das ideale Mass zu reduzieren. Vorteilhaft, jedoch nicht zwingend, sind beide Spannschrauben gleich ausgebildet, wobei z. B. auch eine der Spannschraube einen Schaft ohne einen verjüngten Abschnitt aufweisen kann.

Vorzugsweise entspricht die axiale Erstreckung des verjüngten Abschnitts dem 1.3- bis 1.7-fachen der axialen Erstreckung des Innengewindeabschnitts, was das Spiel zwischen der Spannschraube und den Flanschen auf ein vorteilhaftes Mass begrenzt und dem Anwender eine ausreichende Anzeige der idealen Klemmkraft während der Montage der Leitung und im montierten Zustand gewährleistet.

Bevorzugt entspricht die axiale Erstreckung des ersten Gewindeabschnitts dem 1.5- bis 3.0-fachen der axialen Erstreckung des Innengewindeabschnitts, was eine ausreichende Gewindelänge zum Aufbringen einer erhöhten Klemmkraft auf die eingelegte Leitung gewährleistet.

Vorzugsweise ist zwischen dem verjüngten Abschnitt und einem freien Ende des Schafts zumindest ein weiterer verjüngter Abschnitt vorgesehen, dessen axiale Erstreckung dem 1.1-bis 2.0-fachen der axialen Erstreckung des Innengewindeabschnitts entspricht. Liegt dieser weitere verjüngte Abschnitt im Innengewindeabschnitt, so bildet dieser ein Schwenkgelenk für die am Flansch mit dem Innengewindeabschnitt unverlierbar gehaltene Spannschraube aus. Dieser weitere verjüngte Abschnitt ermöglicht somit zusätzlich ein leichtes Verschwenken der Spannschraube, was eine einfache Anordnung einer Leitung in der Rohrschelle und eine leichte Verschliessbarkeit derselben gewährleistet. Der sich von dem weiteren verjüngten Abschnitt in Richtung des freien Endes der Spannschraube erstreckende Abschnitt des Schaftes ist vorteilhaft ebenfalls mit einem Gewinde versehen, das vorteilhaft den Gewinden am ersten und/oder am zweiten Gewindeabschnitt entspricht. Alternativ ist zur unverlierbaren Sicherung der Spannschraube an dem betreffenden Flansch deren freies Ende verdickt, z. B. gestaucht ausgebildet.

In einer weiter vorteilhaften Ausführungsform der Spannschraube ist diese mit mehreren jeweils axial zueinander beabstandeten verjüngten Abschnitten versehen, zwischen denen jeweils ein Gewindeabschnitt vorgesehen ist. Somit können dem Anwender mehrere Montagezustände mit der entsprechend aufgebrachten Klemmkraft angezeigt werden. Somit ist es z. B. möglich, mit einer Grösse von Rohrschellen Leitungen mit unterschiedlichen Durchmessern zu fixieren, wobei der Anwender an der Position der Spannschraube in Bezug auf den Flansch mit dem Innengewindeabschnitt die eingestellte Klemmkraft für den entsprechenden Leitungsdurchmesser erkennt und beispielsweise anhand einer zur Verfügung gestellten Tabelle ablesen und überprüfen kann.

Beispielsweise wird der Schaft einer Spannschraube mit vier zueinander beabstandeten verjüngten Abschnitten versehen. Liegt der dem freien Ende des Schafts nächstliegende verjüngte Abschnitt im Innengewindeabschnitt des Flansches, ist die Spannschraube verschwenkbar an dem entsprechenden Flansch gehalten. Kommt bei einem weiteren Eindrehen der Spannschraube der nächste verjüngte Abschnitt des Schafts im Innengewindeabschnitt des Flansches zu liegen, ist beispielsweise die, z. B. für eine Schallentkopplung, optimale Klemmkraft auf die eingelegte Leitung aufgebracht. Soll die eingelegte Leitung temporär stärker fixiert werden, dreht der Anwender die Spannschraube weiter ein, bis der nächstfolgende verjüngte Abschnitt des Schafts im Innengewindeabschnitt des Flansches zu liegen kommt. Ist die eingelegte Leitung eine Steigleitung und soll diese mit der Rohrschelle ausreichend fixiert werden, wird die Spannschraube weiter in den Innengewindeabschnitt des Flansches eingeschraubt bis der vierte verjüngte Abschnitt des Schafts im Innengewindeabschnitt des Flansches liegt.

Bevorzugt ist zumindest einer der verjüngten Abschnitte des Schafts mit einer Kennzeichnung versehen, welche dem Anwender anhand der äusseren Erscheinung des entsprechenden verjüngten Abschnitts visuell die eingestellte Klemmkraft signalisiert. Beispielsweise wird der oder die verjüngten Abschnitte mit einer entsprechenden Farbe als Kennzeichnung versehen. Beispielsweise sind ein verjüngter Abschnitt des Schafts, der die optimal eingestellte Klemmkraft darstellt, grün und ein verjüngter Abschnitt, der eine erhöhte Klemmkraft ermöglicht, rot gekennzeichnet. Anstelle einer Farbe kann der verjüngte Abschnitt auch mit einer Profilierung, z. B. einer Rändelung als Kennzeichnung versehen sein. Des Weiteren ist es denkbar, Profilierungen und farbliche Kennzeichnungen an einer Spannschraube miteinander zu kombinieren.

Die Erfindung wird nachstehend anhand von Ausführungsbeispielen näher erläutert. Es zeigen:
- Fig. 1: Ein erstes Ausführungsbeispiel einer Rohrschelle in Seitenansicht;
- Fig. 2: einen vergrösserten Detailschnitt der Rohrschelle mit der Spannschraube in einer ersten Stellung;
- Fig. 3: einen vergrösserten Detailschnitt der Rohrschelle gem. Fig. 2 mit der Spannschraube in einer zweiten Stellung;
- Fig. 4: ein erstes Ausführungsbeispiel einer Spannschraube in Seitenansicht;
- Fig. 5: ein zweites Ausführungsbeispiel einer Spannschraube in Seitenansicht; und
- Fig. 6: ein zweites Ausführungsbeispiel einer Rohrschelle in Seitenansicht.

Grundsätzlich sind in den Figuren gleiche Teile mit den gleichen Bezugszeichen versehen.

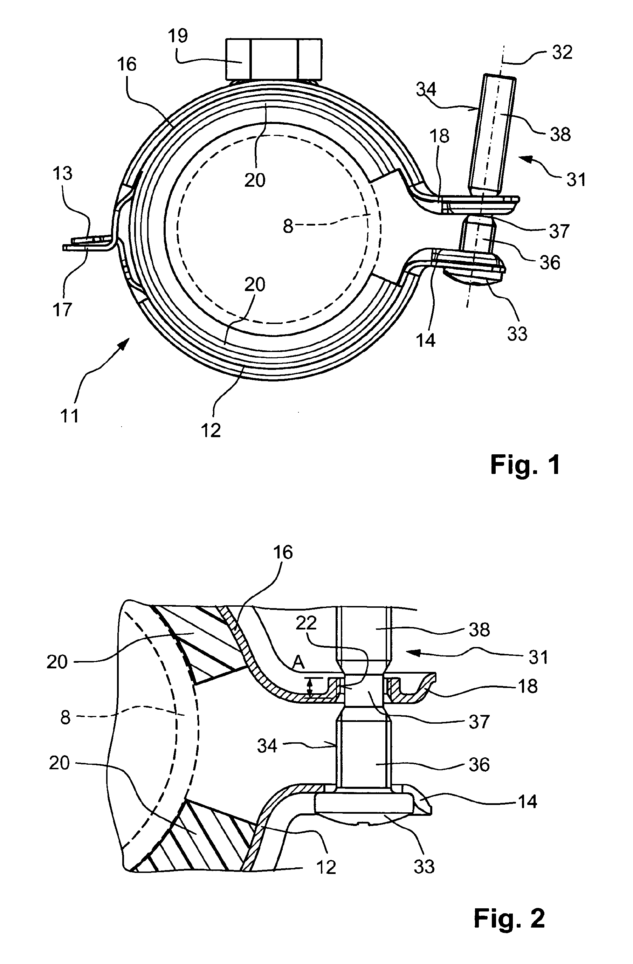

Die in den Figuren 1 bis 4 dargestellte Rohrschelle weist einen aus zwei, jeweils eine Krümmung aufweisenden Schellenbügeln 12 und 16 gebildeten Schellenring auf. Die Schellenbügel 12 und 16 sind aus Metall gefertigt und erstrecken sich jeweils annähernd über einen Halbkreis. Der erste Schellenbügel 12 weist an einem Ende einen krümmungsseitig nach aussen ragenden ersten Flansch 13 sowie an dem von diesem abgewandten Ende einen krümmungsseitig nach aussen ragenden zweiten Flansch 14 auf. Der zweite Schellenbügel 16 weist an einem Ende einen krümmungsseitig nach aussen ragenden ersten Flansch 17 sowie an dem von diesem abgewandten Ende einen krümmungsseitig nach aussen ragenden zweiten Flansch 18 auf. Zudem ist an dem zweiten Schellenbügel 16 eine Anschlussmutter 19 für ein hier nicht dargestelltes Befestigungsmittel 7 zur Befestigung der Rohrschelle 11 an einem hier nicht dargestellten Untergrund oder Träger vorgesehen. An dem ersten Schellenbügel 12 wie auch an dem zweiten Schellenbügel 16 ist jeweils krümmungsseitig innen eine Einlage 20 zur Schallentkopplung der eingelegten Leitung 8 vorgesehen.

Die ersten Flansche 13 und 17 sind miteinander gelenkig verbunden und bilden eine Schwenkverbindung für die beiden Schellenbügel 12 und 16 aus, was ein einfaches Einlegen der mit der Rohrschelle 11 zu fixierenden Leitung 8 gewährleistet. Der Schellenring ist mittels einer Spannschraube 31 mit einer Schraubenlängsachse 32 verschliessbar, wobei die Spannschraube 31 an den zweiten, einander zugewandten Flanschen 14 und 18 der Schellenbügel 12 und 16 vorgesehen ist.

Der zweite Flansch 14 des ersten Schellenbügels 12 ist mit einer Öffnung 15 versehen, durch welche die Spannschraube 31 hindurchführbar ist Der zweite Flansch 18 des zweiten Schellenbügels 16 weist einen Durchzug 21 auf, in dem ein Innengewindeabschnitt 22 für den Eingriff eines Gewindeabschnitts der Spannschraube 31 vorgesehen ist. Der Innengewindeabschnitt 22 weist eine in Bezug auf die Schraubenlängsachse 32 der Spannschraube 31 axiale Erstreckung A auf.

Die Spannschraube 31 weist einen Schraubenkopf 33 und einen sich entlang der Schraubenlängsachse 32 erstreckenden Schaft 34 auf, der anschliessend an den Schraubenkopf 33 einen ersten Gewindeabschnitt 36, daran anschliessend einen verjüngten Abschnitt 37 und daran anschliessend einen zweiten Gewindeabschnitt 38 aufweist.

Die axiale Erstreckung B des ersten Gewindeabschnitts 36 entspricht dem 1.0- bis 4.0-fachen, vorteilhaft dem 1.5- bis 3.0-fachen der axialen Erstreckung A des Innengewindeabschnitts 22 und die axiale Erstreckung C des verjüngten Abschnitts 37 entspricht dem 1.0- bis 2.0-fachen, vorteilhaft dem 1.3- bis 1.7-fachen der axialen Erstreckung A des Innengewindeabschnitts 22. Für eine vorteilhaft einfache Fertigung der Spannschraube beträgt die axiale Erstreckung B des ersten Gewindeabschnitts 36 10% bis 40% der Gesamtlänge L des Schafts 34. Die Übergänge 39 und 40 vom verjüngten Abschnitt 37 zu dem ersten Gewindeabschnitt 36 bzw. zu dem zweiten Gewindeabschnitt 38 sind konisch ausgebildet. Der erste Gewindeabschnitt 36 und der zweite Gewindeabschnitt 38 weisen vorteilhaft beide die gleiche Gewindeausgestaltung auf.

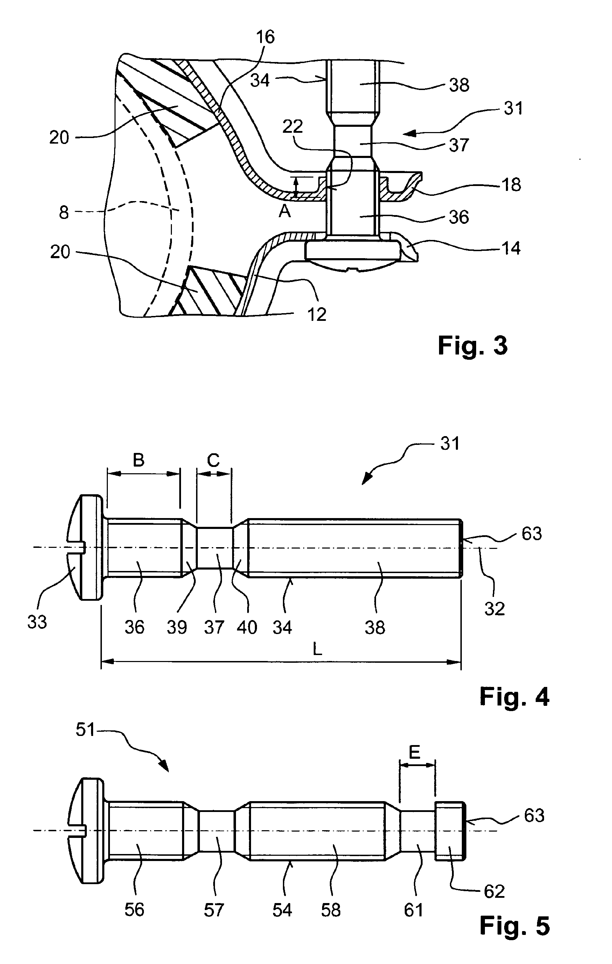

Anhand der Figuren 2 und 3 wird nachfolgend die Verwendung der Rohrschelle 11 dargelegt. Nach dem Einlegen der Leitung 8 in die Rohrschelle 11 werden die Schellenbügel 12 und 16 mittels der Spannschraube 31 geschlossen. Dabei steht zu Beginn des Verspannvorgangs der zweite Gewindeabschnitt 38 der Spannschraube 31 mit dem Innengewindeabschnitt 22 im zweiten Flansch 18 des zweiten Schellenbügels 16 in Eingriff. Sobald der verjüngte Abschnitt 37 des Schafts 34 im Innengewindeabschnitt 22 liegt, dreht bei einer weiteren Drehung der Spannschraube 31 diese leer, womit dem Anwender angezeigt wird, dass die auf die eingelegte Leitung bezogene, optimale Klemmkraft eingestellt wurde (siehe Fig. 2).

Zum Aufbringen einer erhöhten Klemmkraft auf die eingelegte Leitung 8 wird die Spannschraube 31 zu dem zweiten Flansch 18 des zweiten Schellenbügels 16 hin verschoben und weiter gedreht, bis der erste Gewindeabschnitt 36 der Spannschraube 31 in den Innengewindeabschnitt 22 im zweiten Flansch 18 eingreift (siehe Fig. 3).

Aufgrund der elastischen Eigenschaften der Einlage 20 haben die Flansche 14 und 18 die Tendenz, sich zu öffnen. Im zweiten Flansch 18 des zweiten Schellenbügels 16 ist die Spannschraube entweder über ihre Gewindeabschnitte 36 oder 38 oder über den verjüngten Abschnitt 37 unverlierbar gehalten. Der die Öffnung 15 im zweiten Flansch 14 des ersten Schellenbügels 12 radial überragende Schraubenkopf 33 der Spannschraube 31 begrenzt den maximalen Öffnungsweg.

In der Figur 5 ist eine Spannschraube 51 als Variante zu der zuvor beschriebenen Spannschraube 31 dargestellt. Neben dem ersten Gewindeabschnitt 56, dem verjüngten Abschnitt 57 und dem zweiten Gewindeabschnitt 58 weist diese Spannschraube 51 zwischen dem verjüngten Abschnitt 57 und einem freien Ende 63 des Schafts 54 einen weiteren verjüngten Abschnitt 61 auf. Die axiale Erstreckung E des weiteren verjüngten Abschnitts 61 entspricht dem 1.1- bis 2.0-fachen, vorteilhaft dem 1.3- bis 1.7-fachen der axialen Erstreckung A des Innengewindeabschnitts 22 im zweiten Flansch 18 des zweiten Schellenbügels 16. Zwischen dem freien Ende 63 des Schafts und dem weiteren verjüngten Abschnitts 61 ist ein dritter Gewindeabschnitt 62 vorgesehen, der vorteilhaft die gleiche Gewindeausgestaltung wie der erste Gewindeabschnitt 56 und/oder der zweite Gewindeabschnitt 58 aufweist. Die axialen Erstreckungen des ersten Gewindeabschnitts 56 und des verjüngten Abschnitts 57 entsprechen im Wesentlichen den axialen Erstreckungen B und C des ersten Gewindeabschnitts 36 und des verjüngten Abschnitts 37 der Spannschraube 31. Der sich an den ersten Gewindeabschnitt 56 anschliessende verjüngte Abschnitt 57 ist mit einer grünen Farbe als Kennzeichnung desselben versehen.

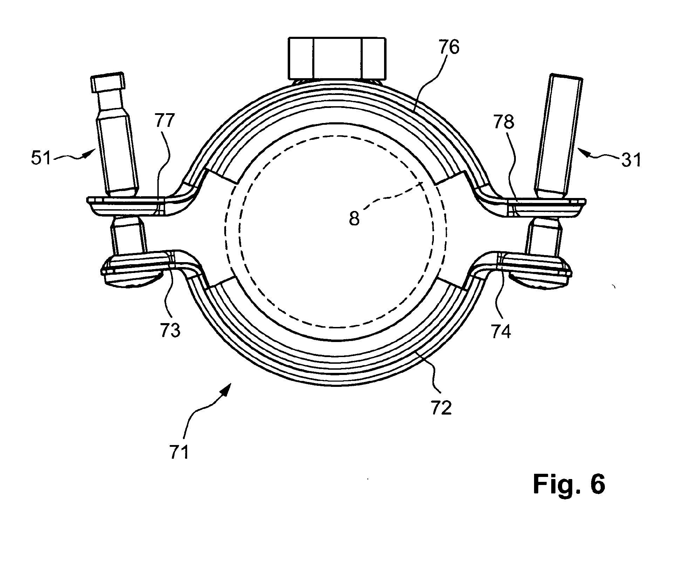

Figur 6 zeigt die Rohrschelle 71 mit einem aus zwei, jeweils eine Krümmung aufweisenden Schellenbügeln 72 und 76 gebildeten Schellenring, wobei die beiden Schellenbügel 72 und 76 im Unterschied zu der zuvor beschriebenen Rohrschelle 11 über zwei Spannschrauben 31 und 51 miteinander verbunden und miteinander verspannbar sind. Der erste Flansch 73 und der zweite Flansch 74 des ersten Schellenbügels 72 weisen jeweils eine Öffnung für die Durchführung der Spannschraube 51 bzw. für die Spannschraube 31 auf. Der erste Flansch 77 des zweiten Schellenbügels 76 ist mit einem Innengewindeabschnitt für den Eingriff eines der Gewindeabschnitte der Spannschraube 51 versehen. Der zweite Flansch 78 des zweiten Schellenbügels 76 ist ebenfalls mit einem Innengewindeabschnitt für den Eingriff eines der Gewindeabschnitte der Spannschraube 31 versehen.

Diese Ausgestaltung der Rohrschelle 71 ermöglicht eine einfache Montage, da die Schellenbügel 72 und 76 nicht nur zueinander verschwenkbar, sondern auch zueinander verdrehbar sind. Zudem ermöglicht diese Ausgestaltung der Rohrschelle 71 bedarfsweise mittels einer der Spannschrauben 31 bzw. 51 oder mittels beiden Spannschrauben 31 und 51 die Klemmkraft auf die eingelegte Leitung 8 zu erhöhen und anschliessend wieder auf das ideale Mass zu reduzieren.

## Patentansprüche

1. Rohrschelle mit einem Schellenring, der zwei einander zugewandte Flansche (14, 18; 73, 77, 74, 78) aufweist und der mittels einer Spannschraube (31; 51) mit einer Schraubenlängsachse (32) verschliessbar ist, wobei
einer der Flansche (18; 77, 78) einen Innengewindeabschnitt (22) mit einer in Bezug auf die Schraubenlängsachse (32) der Spannschraube (31; 51) axialen Erstreckung (A) für den Eingriff eines Gewlndeabschnitts der Spannschraube (31; 51) und der andere Flansch (14; 73, 74) eine Öffnung (15) für die Durchführung der Spannschraube (31; 51) aufweist, und wobei
die Spannschraube (31; 51) einen Schraubenkopf (33) und einen sich entlang der Schraubenlängsachse (32) erstreckenden Schaft (34) aufweist, der anschllessend an den Schraubenkopf (33) einen ersten Gewindeabschnitt (36; 56), daran anschliessend einen verjüngten Abschnitt (37; 57) und daran anschliessend zumindest einen zweiten Gewindeabschnitt (38; 58) aufweist, **dadurch gekennzeichnet, dass**
die axiale Erstreckung (B) des ersten Gewindeabschnitts (36; 56) dem 1.0- bis 4.0-fachen der axialen Erstreckung (A) des Innengewindeabschnitts (22) und die axiale Erstreckung (C) des verjüngten Abschnitts (37; 57) dem 1.0- bis 2.0-fachen der axialen Erstreckung (A) des Innengewindeabschnitts (22) entspricht, und dass
die axiale Erstreckung (B) des ersten Gewindeabschnitts (36, 56) 10% bis 40% der Gesamtlänge (L) des Schafts (34) beträgt.

2. Rohrschelle nach Anspruch 1, **dadurch gekennzeichnet, dass** die axiale Erstreckung (C) des verjüngten Abschnitts (37; 57) dem 1.3- bis 1.7-fachen der axialen Erstreckung (A) des Innengewindeabschnitts (22) entspricht.

3. Rohrschelle nach Anspruch 1 oder 2, **dadurch gekennzeichnet, dass** die axiale Erstreckung (B) des ersten Gewindeabschnitts (36; 56) dem 1.5- bis 3.0-fachen der axialen Erstreckung (A) des Innengewindeabschnitts (22) entspricht.

4. Rohrschelle nach einem der Ansprüche 1 bis 3, **dadurch gekennzeichnet, dass** zwischen dem verjüngten Abschnitt (57) und einem freien Ende (63) des Schafts (54) zumindest ein weiterer verjüngter Abschnitt (61) vorgesehen ist, dessen axiale Erstreckung (E) dem 1.1- bis 2.0-fachen der axialen Erstreckung (A) des Innengewindeabschnitts (22) entspricht.

5. Rohrschelle nach Anspruch 4, **dadurch gekennzeichnet, dass** zumindest einer der verjüngten Abschnitte (57, 61) des Schafts (54) mit einer Kennzeichnung versehen ist.

## Claims

1. Pipe clamp with a clamp ring, which has two flanges facing each other (14, 18; 73, 77, 74, 78) and which may be locked by means of a tightening screw (31; 51) with a longitudinal axis (32), in which
one of the flanges (18; 77, 78) has an internal thread section (22) with an axial extension (A) with reference to the longitudinal axis (32) of the tightening screw (31; 51) for engaging a thread section of the tightening screw (31; 51) and the other flange (14; 73, 74) has an opening (15) for the tightening screw (31; 51) to pass through, and in which
the tightening screw (31; 51) has a screw head (33) and a shaft (34) extending along the longitudinal axis (32), which has a first thread section (36; 56) following from the screw head (33), following from this a narrow section (37; 57) and following from this at least a second thread section (38; 58), **characterised in that**
the axial extension (B) of the first thread section (36; 56) corresponds to 1.0 to 4.0 times the axial extension (A) of the internal thread section (22) and the axial extension (C) of the narrow section (37; 57) corresponds to 1.0 to 2.0 times the axial extension (A) of the internal thread section (22), and that
the axial extension (B) of the first thread section (36, 56) is 10% to 40% of the overall length (L) of the shaft (34).

2. Pipe clamp according to claim 1, **characterised in that** the axial extension (C) of the narrow section (37; 57) corresponds to 1.3 to 1.7 times the axial extension (A) of the internal thread section (22).

3. Pipe clamp according to claim 1 or 2, **characterised in that** the axial extension (B) of the first thread section (36; 56) corresponds to 1.5 to 3.0 times the axial extension (A) of the internal thread section (22).

4. Pipe clamp according to one of claims 1 to 3, **characterised in that** at least another narrow section (61) is provided between the narrow section (57) and a free end (63) of the shaft (54), the axial extension (E) of which corresponds to 1.1 to 2.0 times the axial extension (A) of the internal thread section (22).

5. Pipe clamp according to claim 4, **characterised in that** at least one of the narrow sections (57, 61) of the shaft (54) is provided with a marking.

## Revendications

1. Collier pour tuyau muni d'une bague de collier, comportant deux brides l'une en face de l'autre (14, 18 ; 73, 77, 74, 78) et pouvant être fermé au moyen d'une vis de serrage (31 ; 51) avec un axe longitudinal de vis (32), dans lequel
l'une des brides (18 ; 77, 78) comporte une partie intérieurement filée (22) avec une extension axiale (A) par rapport à l'axe longitudinal de vis (32) de la vis de serrage (31 ; 51) pour venir en prise avec une partie filetée de la vis de serrage (31 ; 51), et l'autre bride (14 ; 73, 74) comporte une ouverture (15) pour le passage de la vis de serrage (31 ; 51), et dans lequel
la vis de serrage (31 ; 51) comporte une tête de vis (33) et une tige (34) s'étendant le long de l'axe longitudinal de vis (32), laquelle tige comporte une première partie filetée (36 ; 56) qui suit la tête de vis (33), puis une partie rétrécie (37 ; 57) et ensuite au moins une seconde partie filetée (38 ; 58), **caractérisé en ce que**
l'extension axiale (B) de la première partie filetée (36 ; 56) correspond à 1,0 à 4,0 fois l'extension axiale (A) de la partie intérieurement filetée (22) et l'extension axiale (C) de la partie rétrécie (37 ; 57) correspond à 1,0 à 2,0 fois l'extension axiale (A) de la partie intérieurement filetée (22), et **en ce que**
l'extension axiale (B) de la première partie filetée (36, 56) représente 10 % à 40 vs de la longueur totale (L) de la tige (34).

2. Collier pour tuyau selon la revendication 1, **caractérisé en ce que** l'extension axiale (C) de la partie rétrécie (37 ; 57) correspond à 1,3 à 1,7 fois l'extension axiale (A) de la partie intérieurement filetée (22).

3. Collier pour tuyau selon la revendication 1 ou 2, **caractérisé en ce que** l'extension axiale (B) de la première partie filetée (36 ; 56) correspond à 1,5 à 3,0 fois l'extension axiale (A) de la partie intérieurement filetée (22).

4. Collier pour tuyau selon l'une quelconque des revendications 1 à 3, **caractérisé en ce qu'**entre la partie rétrécie (57) et une extrémité libre (63) de la tige (54) est prévue au moins une partie rétrécie supplémentaire (61) dont l'extension axiale (E) correspond à 1,1 à 2,0 fois l'extension axiale (A) de la partie intérieurement filetée (22).

5. Collier pour tuyau selon la revendication 4, **caractérisé en ce qu'**au moins une des parties rétrécies (57, 61) de la tige (54) est munie d'un marquage.
